# EUROPEAN PATENT APPLICATION

(11) **EP 4 421 754 A1**
(43) Date of publication of application: **28.08.2024**
(21) Application number: 24156179.4
(22) Date of filing: 07.02.2024
(51) Int. Cl.: G06V 10/75, G06F 21/31, G06V 20/52, G06V 20/64

(54) **APPARATUS, METHOD, AND SYSTEM FOR SPATIAL-TEMPORAL AUTHENTICATION**

(30) Priority: 22.02.2023 GB 202302473
(71) Applicant: Nokia Technologies Oy, 02610 Espoo (FI)
(72) Inventor: HUANG, Howard, New York (US); RADIVOJEVIC, Zoran, Cambridge (GB)
(74) Representative: Nokia EPO representatives

(57) **Abstract**

An approach is provided for spatial-temporal authentication. The approach involves, for example, receiving first image data captured by a first camera device and depicting an object positioned at a location, and second image data captured by a second camera device depicting the object and captured within a time threshold of the first image data. The approach also involves processing the first image data to extract one or more first object features and the second image data to extract one or more second object features. The approach further involves determining a match between the one or more first object features and the one or more second object features. The approach further involves providing an authentication output indicating that the first camera device and the second camera device are or were at the location of the object within the time threshold.

## Description

### BACKGROUND

Many transactions are conducted during in-person meetings between multiple parties. These in-person meetings are often transient and maybe anonymous, thereby presenting significant technical challenges with respect to documenting and authenticating that the multiple parties were at the same place at the same time during the meeting while also maintaining anonymity.

### SOME EXAMPLE EMBODIMENTS

Therefore, there is a need for spatial-temporal authentication.

According to another embodiment, an apparatus comprises at least one processor, and at least one memory storing instructions that, when executed by the at least one processor, cause the apparatus at least to receive first image data captured by a first camera device. The first image data depicts an object positioned at a location. The apparatus is also caused to receive second image data captured by a second camera device. The second image data depicts the object at the location and is captured within a time threshold of the first image data. The apparatus is further caused to process the first image data to extract one or more first object features and to process the second image data to extract one or more second object features. The apparatus is further caused to determine a match between the one or more first object features and the one or more second object features. The apparatus is further caused to provide an authentication output indicating that the first camera device and the second camera device are or were at the location of the object within the time threshold.

According to one example embodiment, an apparatus comprises means for receiving first image data captured by a first camera device. The first image data depicts an object positioned at a location. The apparatus also comprises means for receiving second image data captured by a second camera device. The second image data depicts the object at the location and is captured within a time threshold of the first image data. The apparatus further comprises means for processing the first image data to extract one or more first object features and to process the second image data to extract one or more second object features. The apparatus further comprises means for determining a match between the one or more first object features and the one or more second object features. The apparatus further comprises means for providing an authentication output indicating that the first camera device and the second camera device are or were at the location of the object within the time threshold.

According to another embodiment, a method comprises receiving first image data captured by a first camera device. The first image data depicts an object positioned at a location. The method also comprises receiving second image data captured by a second camera device. The second image data depicts the object at the location and is captured within a time threshold of the first image data. The method further comprises processing the first image data to extract one or more first object features and to process the second image data to extract one or more second object features. The method further comprises determining a match between the one or more first object features and the one or more second object features. The method further comprises providing an authentication output indicating that the first camera device and the second camera device are or were at the location of the object within the time threshold.

According to another embodiment, a computer program comprising instructions which, when executed by an apparatus, cause the apparatus to receive first image data captured by a first camera device. The first image data depicts an object positioned at a location. The apparatus is also caused to receive second image data captured by a second camera device. The second image data depicts the object at the location and is captured within a time threshold of the first image data. The apparatus is further caused to process the first image data to extract one or more first object features and to process the second image data to extract one or more second object features. The apparatus is further caused to determine a match between the one or more first object features and the one or more second object features. The apparatus is further caused to provide an authentication output indicating that the first camera device and the second camera device are or were at the location of the object within the time threshold.

According to another embodiment, a non-transitory computer-readable storage medium comprising program instructions that, when executed by an apparatus, cause the apparatus to receive first image data captured by a first camera device. The first image data depicts an object positioned at a location. The apparatus is also caused to receive second image data captured by a second camera device. The second image data depicts the object at the location and is captured within a time threshold of the first image data. The apparatus is further caused to process the first image data to extract one or more first object features and to process the second image data to extract one or more second object features. The apparatus is further caused to determine a match between the one or more first object features and the one or more second object features. The apparatus is further caused to provide an authentication output indicating that the first camera device and the second camera device are or were at the location of the object within the time threshold.

According to one example embodiment, an apparatus image processing circuitry configured to perform receiving first image data captured by a first camera device. The first image data depicts an object positioned at a location. The image processing circuitry is also configured to perform receiving second image data captured by a second camera device. The second image data depicts the object at the location and is captured within a time threshold of the first image data. The image processing circuitry is further configured to perform processing the first image data to extract one or more first object features and to process the second image data to extract one or more second object features. The apparatus also comprises authentication circuitry configured to perform determining a match between the one or more first object features and the one or more second object features. The apparatus further comprises output circuitry configured to perform providing an authentication output indicating that the first camera device and the second camera device are or were at the location of the object within the time threshold.

According to one example embodiment, a system comprises one or more devices including one or more of a cloud server device, an edge device, an internet of things (IoT) device, a user equipment device, or a combination thereof. The one or more devices are configured to receive first image data captured by a first camera device. The first image data depicts an object positioned at a location. The one or more devices are also configured to receive second image data captured by a second camera device. The second image data depicts the object at the location and is captured within a time threshold of the first image data. The one or more devices are further configured to process the first image data to extract one or more first object features and to process the second image data to extract one or more second object features. The one or more devices are further configured to determine a match between the one or more first object features and the one or more second object features. The one or more devices are further configured to provide an authentication output indicating that the first camera device and the second camera device are or were at the location of the object within the time threshold.

According to a further embodiment, a device comprises at least one processor; and at least one memory including a computer program code for one or more programs, the at least one memory and the computer program code configured to, with the at least one processor, cause the device to receive first image data captured by a first camera device. The first image data depicts an object positioned at a location. The apparatus is also caused to receive second image data captured by a second camera device. The second image data depicts the object at the location and is captured within a time threshold of the first image data. The apparatus is further caused to process the first image data to extract one or more first object features and to process the second image data to extract one or more second object features. The apparatus is further caused to determine a match between the one or more first object features and the one or more second object features. The apparatus is further caused to provide an authentication output indicating that the first camera device and the second camera device are or were at the location of the object within the time threshold.

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, on (or derived at least in part from) any one or any combination of methods (or processes) disclosed in this application as relevant to any embodiment of the invention.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the mobile device side or in any shared way between service provider and mobile device with actions being performed on both sides.

For various example embodiments, the following is applicable: An apparatus comprising means for performing a method of the claims.

According to some aspects, there is provided the subject matter of the independent claims. Some further aspects are defined in the dependent claims.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the spirit and scope of the invention. Accordingly, the drawings and description are to be regarded as illustrative in nature, and not as restrictive.

### BRIEF DESCRIPTION OF THE DRAWINGS

The example embodiments of the invention are illustrated by way of examples, and not by way of limitation, in the figures of the accompanying drawings:
FIG. 1 is a diagram of a system capable of providing anonymous spatial-temporal authentication, according to one example embodiment;
FIG. 2 is a flowchart of a process for providing anonymous spatial-temporal authentication, according to one example embodiment;
FIGs. 3A and 3B are diagrams of example scenarios for capturing image data for anonymous spatial-temporal authentication, according to various example embodiments;
FIG. 4 is a signaling diagram illustrating an example of an authentication use case, according to one example embodiment;
FIG. 5 is a diagram of hardware that can be used to implement example embodiments; and
FIG. 6 is a diagram of a chip set that can be used to implement example embodiments.

### DESCRIPTION OF SOME EMBODIMENTS

Examples of a method, apparatus, and computer program for providing spatial-temporal authentication, according to one example embodiment, are disclosed in the following. In the following description, for the purposes of explanation, numerous specific details and examples are set forth to provide a thorough understanding of the embodiments of the invention. It is apparent, however, to one skilled in the art that the embodiments of the invention may be practiced without these specific details or with an equivalent arrangement. In other instances, structures and devices are shown in block diagram form to avoid unnecessarily obscuring the embodiments of the invention.

Reference in this specification to "one embodiment" or "an embodiment" means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. In addition, the embodiments described herein are provided by example, and as such, "one embodiment" can also be used synonymously as "one example embodiment." Further, the terms "a" and "an" herein do not denote a limitation of quantity, but rather denote the presence of at least one of the referenced items. Moreover, various features are described which may be exhibited by some embodiments and not by others. Similarly, various requirements are described which may be requirements for some embodiments but not for other embodiments.

As used herein, "at least one of the following: <a list of two or more elements>," "at least one of <a list of two or more elements>," "<a list of two or more elements> or a combination thereof," and similar wording, where the list of two or more elements are joined by "and" or "or", mean at least any one of the elements, or at least any two or more of the elements, or at least all the elements.

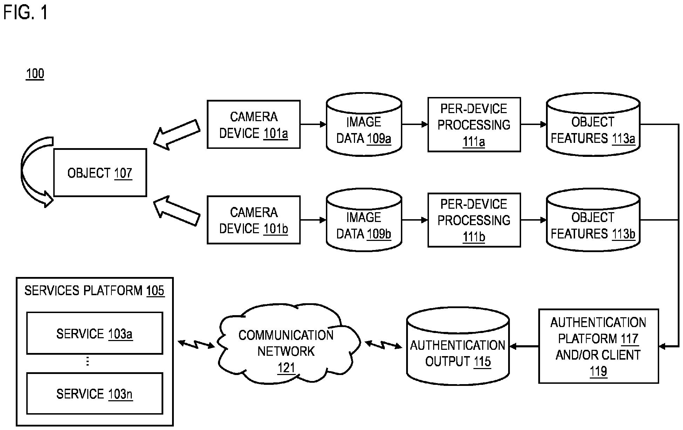

FIG. 1 is a diagram of a system 100 capable of providing spatial-temporal authentication, according to one example embodiment. In one embodiment, spatial-temporal authentication refers to authenticating that two or more parties (and/or devices) are or were located within proximity of a certain location at the same time (e.g., substantially the same time, or within a designated time window) in a privacy preserving way, i.e., anonymously (e.g., without exposing the identities of the participating parties, location, associated objects, etc.). Accordingly, a technical problem addressed by the various example embodiments described herein relates to how to confirm that two or more devices equipped with cameras (e.g., camera devices 101a-101b - also collectively referred to as camera devices 101) occupy the same physical space at the same time to provide spatial-temporal authentication. Solving this problem would enable applications requiring real-world authentication and/or transactions (e.g., one or more services 103a-103n - also collectively referred to as services 103 - of a services platform 105 that provide services, functions, etc. based on anonymous spatial-temporal authentication).

To address this technical challenge, the system 100 of FIG. 1 introduces a process with a capability to use computer vision techniques (e.g., machine learning-based feature detectors, and/or three dimensional (3D) point cloud techniques) of two or more camera devices 101 (e.g., any combination of smart glasses, smart phone, vehicle, fixed or mobile wireless camera device, camera with a wireline connection, or any combination thereof) substantially simultaneously or substantially at the same time inspecting (for example, video recording, still imaging, Lidar (light detection and ranging) scanning, Lidar imaging, etc. or any combination thereof) one or more common objects 107 (e.g., an object in a user's hand, the user's hand itself, and/or any other object in within proximity of a certain location, or in any combination thereof) to generate respective image data 109a and 109b (also collectively referred to as image data 109), a hashing technique for anonymity and local analytics (e.g., per-device processing 111a and 111b - also collectively referred to as per-device processing 111) to recognize features (e.g., object features 113a and 113b - also collectively referred to as object features 113) on the one or more objects 107. Based on the process, the system 100 then provides an authentication output 115 (e.g., a data indication such as a token, flag, or equivalent to indicate - e.g., yes or no - whether the two or more camera devices 101/users are or were in the same place and time) via an authentication platform 117 (e.g., server-side or cloud-based component) and/or an authentication client 119 (e.g., device-side or local component of respective camera devices 101). Based on the authentication output 115 the system can grant permission to access to one or more services, functions, etc. (e.g., associated with services 103 of the services platform 105 such as but not limited to performing transactions, operating payments, etc.) with complete anonymity (e.g., such that no information about one or more objects 107, location, etc. are known).

In other words, various embodiments of the system 100 and related protocols use at least two camera devices 101 (e.g., comprising or otherwise including smart glasses, smart phones, vehicles, fixed cameras onsite, or a combination thereof) at the same time (e.g. substantially simultaneously, substantially the same time, or within a designated time window) inspecting one or more common object 107 to authenticate that the at least two camera devices 101 occupy the same space at the same time. By way of example, as part of the authentication process, the object 107 can be held in a user's hand and rotated or otherwise moved slowly, or the object 107 can be free-standing and the users with respective camera devices 101 move or the respective camera devices 101 are moved around the object 107 to capture image data 109 depicting the object 107 from the perspectives of each camera device 101. In one embodiment, hashed features are extracted from the image data 109 of the object 107 to authenticate at least one of the camera devices 101 (and/or corresponding camera device owners/users) to be in the proximity of the same object 107. In some examples, this authentication thereby enables secure and authenticated services 103 such as, but not limited to, micro-trading and/or payments between the owners/users of the camera devices 101 relating to the object 107 (e.g., buying the object 107 held and/or moved/rotated in hand while being seen by two or more camera devices 101). In some other examples, this authentication enables creation of wireless network connection between at least two or more the camera devices 101, users of the devices 101, or owners of the devices 101.

In one embodiment, the authenticating protocol runs locally (e.g., at one of the participating camera devices 101 - i.e., camera device 101a and/or 101b - within proximity of the object 107 via a local authentication client 119) which enables privacy protection and embedded security. In this example, to protect privacy, no real images of the object 107 are used for authentication. Instead, a hashing technique is implemented on the object features 113 extracted from the image data 109 which preserves privacy and anonymity of the object 107 and users.

In one embodiment, local analytics (e.g., per-device processing 111) are used to recognize features of the object 107 (e.g., object features 113) and hashed analogues of the object features 113 of the images, e.g., hashed analogues of the image data 109, are used to generate the authentication output 115. In this way, complete anonymity of the users and object 107 involved in the authentication is guaranteed (e.g., no information regarding the location or objects leaves either device). The authentication output 115 is then used, for instance, to grant permission to operate one or more transactions (such as operational instructions, payment transactions, etc.) and/or perform other services 103 (such as information or content sharing, creating a wireless connection, etc.).

In other embodiments, a server-side or cloud-based trusted platform (e.g., authentication platform 117) can be used in place of or in addition to the local authentication client 119 to perform anonymous spatial-temporal authentication. Under these cloud-based embodiments, the authentication platform 117 can perform one or more functions of the local authentication client 119 over a communications network 121 for delivery of the authentication output 115 back to the one or more camera devices 101 and/or to one or more services 103 of the services platform 105. The one or more functions to be performed by the authentication platform 117 can include but are not limited to any of the local analytics (per-device processing 111) described as being performed by the local authentication client 119.

One example embodiment of the process for anonymous spatial-temporal authentication is described with respect to the components 101-119 of system 100 as shown in FIG. 1. This embodiment is based on the following assumptions. Consider two devices each equipped with a camera (e.g., camera devices 101a and 101b), e.g., an RGB (red-green-blue) camera, and synchronized with each other in time. In one example, the camera devices 101 can obtain a trusted time for a synchronization from the communication network 121, for example, from a short range wireless communication network (for example, WLAN (wireless local area network) or Bluetooth), cellular telecom, NFC (near field communication), optical link, etc. or any combination thereof. In an additional or alternative example, the synchronization could be achieved, for example, by setting up a wireless link between the devices to share the obtained trusted time (e.g., over the communications network 121 comprising means such as but not limited to a short range wireless communication network (e.g. Wi-Fi, or Bluetooth), cellular telecom, NFC, or optical link). The devices are assumed to be synchronized to at least a threshold level (e.g., a millisecond level or other designated threshold level).

With respect to per-device processing 111, two or more or each camera device 101 views a common physical objects 107 (e.g., a small object held in one's hand and moved/rotated in space) at the same time. Respective image data 109a and 109b are captured during the movement/rotation of the object 107 (or rotation or movement of the camera devices 101 in relation to - e.g., around - the object 107). A sequence of time-stamped images (e.g., extracted from a video clip of the image data 109) of this moving/rotating object are captured and processed independently by the two or more or each camera device 101 (e.g., using computer vision algorithms such as three-dimensional (3D) computer vision algorithms that extract 3D features of one or more objects 107 from the image data 109). In the example of FIG. 1, it is assumed that the two camera devices 101 are next to each other viewing the object which is moved or rotated slowly back and forth by hand (twice for example). The image sequence captured by each device is processed to yield, for example, object features 113 (e.g., a 3D point cloud representation of the object 107 or any other designated features such as but not limited to object edges, corners, lines, etc.).

In one embodiment, to perform authentication processing, outputs of the computer vision algorithms (e.g., object features 113) from the two or more or each camera device 101 is compared to verify that the camera devices 101 have viewed the same object 107 at the same time (or within designated time window such as very short period of time under one second while moving/rotating the same physical surface of the object 107 to face each respective camera device 101). For example, given a 3D point cloud representation generated by each device (e.g., example of the extracted object features 113), the point clouds (or other selected object features 113) could be matched (e.g., using an iterative closest point (ICP) algorithm) to verify the same object was viewed. However, a conventional ICP algorithm is not sufficient to verify the object 107 was viewed by the camera devices 101 at the same time. Additional processing is therefore used to determine that the views of the object 107 from the two or more camera devices 101 are consistent with the rotation of the object 107 as a function of time. This additional processing, for instance, includes but is not limited to determining whether the sequence or order in which the object features 113 are view over time is consistent. For example, as the object 107 is moved relative to each camera device 101, different features of the object 107 become visible in the captured image data 109 according to the unique physical characteristics of the object 107.

The various embodiments described herein provided for several technical benefits and advantages. For example, the various embodiments have low overhead cost because no prior information about the devices or environment is required. As another advantage, the system 100 is privacy preserving because no images of the object 107 and/or associated people are needed or used, and an absolute location of the interaction is not determined (i.e., only a relative location). In the case where the authentication processing is performed at one of the devices 101 (e.g., peer-to-peer authentication versus cloud-based authentication), no information ever leaves the devices 101, thereby guaranteeing anonymity and privacy.

Other technical benefits include but are not limited to: (1) the various embodiments of the system 100 can provide authentication over a range of several meters (e.g., compare to the typical range of authentication based on near filed communication (NFC) which is in the centimeter range); and (2) the various embodiments of the system 100 can jointly authenticate multiple camera devices 101 and/or users simultaneously (e.g., more than two camera devices 101 and/or users at a time).

It is contemplated that the functions of the components of the system 100 or any of its components described above may be combined or performed by other components or means of equivalent functionality. The above presented components comprise means for performing the various embodiments and can be implemented in a circuitry, a hardware, a firmware, a software, a chip set, or in any combination thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device (e.g., the camera device 101) or a similar integrated circuit in server, a cellular telecom network device, or other computing or network device.

In another embodiment, one or more of the components of the system 100 (e.g., authentication platform 117 and/or authentication client 119) may be implemented as a cloud-based service, local service, native application, or combination thereof. The functions of the system 100 and its components are discussed with respect to the figures below.

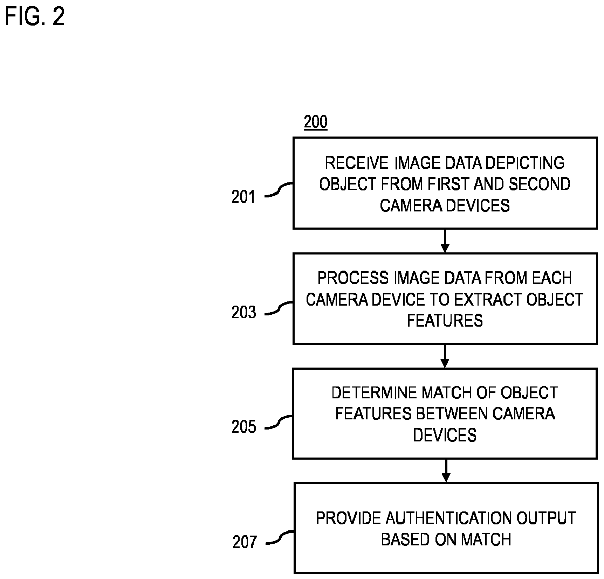

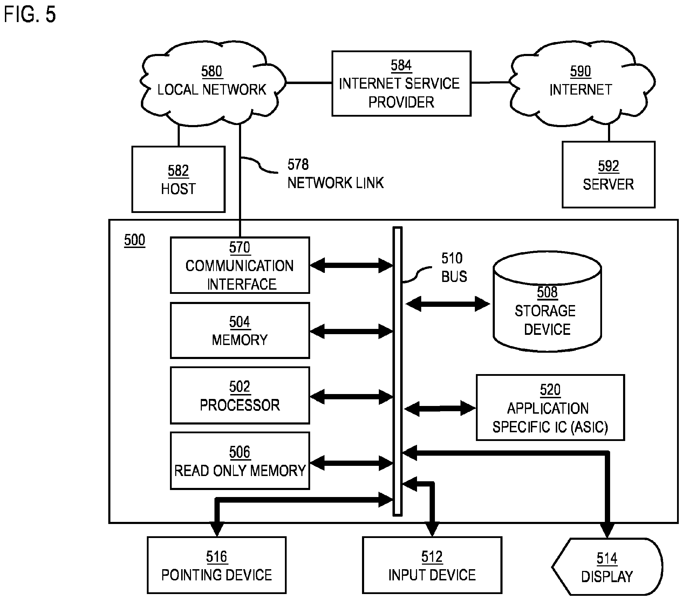

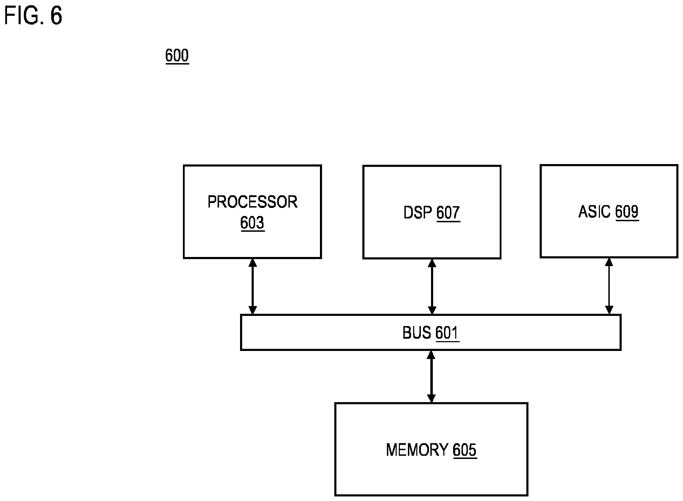

FIG. 2 is a flowchart of a process for providing spatial-temporal authentication, according to various example embodiments. In one example, the authentication platform 117, authentication client 119, and/or any their components (e.g., per-device processing 111) may perform one or more portions of a process 200 and may be implemented in/by various means, for instance, a chip set including a processor and a memory as shown in FIGs. 5 or 6 or in a circuitry, hardware, firmware, software, or in any combination thereof. In one example embodiment, the circuitry includes but is not limited to image processing circuitry, authentication circuitry, and output circuitry. As such, the system 100, authentication platform 117, authentication client 119, and/or any associated component, apparatus, device, circuitry, system, computer program product, and/or non-transitory computer readable medium can provide means for accomplishing various parts of the process 200, as well as means for accomplishing embodiments of other processes described herein. Although the process 200 is illustrated and described as a sequence of steps, it is contemplated that various embodiments of the process 200 may be performed in any order or combination and need not include all of the illustrated steps.

At step 201, the authentication platform 117 and/or authentication client 119 receives image data 109 from two or more camera devices 101, which can be associated with users who are requesting spatial-temporal authentication (e.g., anonymous authentication). The process 200 is described with respect to a first and second camera device 101 participating in an authentication request or event. However, as previously described, it is contemplated that any number of camera devices 101 and corresponding users can participate. It is also contemplated that when the authentication platform 117 is described as performing a function or action, the function or action can also be performed by the authentication client 119 (or any components thereof) alone or in combination with the authentication platform 117.

In one embodiment, the capturing of the first image data 109a and the second image data 109b is synchronized over a wireless connection between the first camera device 101a and the second camera device 101b. For example, a wireless link (e.g., Wi-Fi, Bluetooth, cellular phone, NFC, optical link, etc.) between the two camera devices 101a and 101b is set up or can be set up for setting synchronization between the two devices. The wireless link, for instance, can be via a peer-to-peer (P2P) connection (e.g., direct connection between the two camera devices 101, e.g., over a short range wireless communication means) or via a cloud connection (e.g. synchronizing from one camera device 101a to a server, e.g., a service provider, such as the authentication platform 117, and then from the server to the other camera device 101b, e.g., over a short range wireless communication means and/or cellular telecommunication means). Synchronizing refers to aligning the respective clocks of each camera device 101 so that the timing of when the camera devices 101 capture respective image data 109 at coordinated times (e.g., within a configured time window, based on the rotation rate of the object 107, etc.). In addition or alternatively, synchronizing can include exchanging signals between the camera devices 101 to initiate capture of respective image data 109 at coordinated times.

The capturing of the image data 109 can include video recording the common physical object 107 by each camera device 101 (e.g., at approximately/substantially the same time such as within a designated time window threshold of each other). In general, any physical object could be used, including some aspect of the environment itself, e.g., details of a building. A sequence of time-stamped images (e.g., extracted from the video clip or image data 109) of the (moving/rotating) object 107 are captured and processed independently by each device. In one embodiment, additional sensors such as depth sensors or inertial measurement units (IMUs) could be used to supplement the image data 109 (e.g., sequence of RGB images). Depth sensors (such as a radar or lidar), for instance, can be used for one or more objects 107 which have limited visual features. The IMUs can be used to determine the relative motion of the camera devices 101 in relation to (e.g., around) a static object 107 as they view the static object 107.

From a two-device perspective, the authentication platform 117 receives first image data 109a captured by a first camera device 101a. The first image data 109a, for instance, depicts an object 107 positioned at a location. The authentication platform 117 then receives second image data 109b captured by a second camera device 101b. The second image data 109b depicts the same object 107 and is captured within a time threshold of the first image data 109a.

In one embodiment, visual guidance could be provided on the screen of one or more of the camera devices 101 to suggest actions for capturing the image sequences (e.g., image data 109) that is to be used for later processing to provide spatial-temporal authentication. The guidance, for instance, could be similar to initializing a smartphone for facial recognition. For example, arrows could indicate how to move or rotate a small object. In a case where the object is too large to hold or rotate, arrows could indicate how to move with the camera device 101 through the environment while pointing the camera at the stationary object 107.

At step 203, the authentication platform 117 processes the first image data 109a to extract one or more first object features 113a, and processes the second image data 109b to extract one or more second object features 113b. By way of example, the one or more first object features 113a include a first sequence of features and the one or more second object features 113b include a second sequence of features extracted during a rotation or movement of the object 107 or a movement of the first camera device and the second camera device in relation to the object 107, e.g., around the object, while the first image data and the second image data are captured.

In other words, the image sequences (e.g., image data 109) captured by each camera device 101, for instance, is processed by the same/similar algorithm in each device 101 to yield object features 113 (e.g., by a 3D point cloud representation, edges, corners, etc. of the object). An example of this processing would be to extract visual feature points (e.g., SuperPoint, Oriented Fast and Rotated Brief (ORB), or equivalent) from each image of the image data 109 and then use a Structure from Motion (SfM) algorithm to determine the 3D coordinates of these points in the camera coordinate frame.

When detecting other object features 113, the image data 109 can also be additionally or alternatively processed using one or more pretrained machine learning (ML) means, such as one or more neural networks, e.g., a deep neural network (DNN), a convolutional neural network (CNN), any version of You Only Look Once (YoLo) network, and/or equivalent image recognition algorithm, that can be trained, for example, with CIFAR-100, Aff-Wild2 and/or ImageNet datasets, to detect and recognize object features, such as edges, corners, lines, curves, etc. and/or the one or objects 107 as such. It is noted that ML-based object feature detection is provided by way of illustration and not as a limitation. It is contemplated that non-ML-based object feature detectors can also be used according to the various embodiments described herein.

At step 205, the authentication platform 117 determines a match between the one or more first object features and the one or more second object features. The match between the one or more first object features and the one or more second object features is further based on matching the first sequence of features and the second sequence of features.

In other words, the outputs of the feature extraction algorithms (e.g., object features 113a and 113b) are compared to verify that the camera devices 103 have viewed the same object 107at the same time (or within a designated time window). For example, in embodiments that include 3D point clouds as object features 113, the point clouds resulting from each per-device processing 111 can be matched by using an iterative closest point (ICP) algorithm (or equivalent) to verify the same object 107 was viewed by each camera device 101. For example, spatial consistency is confirmed if the match (e.g., ICP match) exceeds a given threshold value. For another example, in embodiments that include object features detected by ML analysis, the matching can be done by comparing the ML analysis results from the models, whether confidence values are similar, i.e., exceed a given threshold value for the difference in the confidence values.

In some example embodiments, additional processing can be used to determine that the views of the object 107 from the two camera devices 101 are consistent with the movement or rotation of the object 107 as a function of time, to verify the object 107 was viewed by the camera devices 101 at the same time.

In one embodiment, to test temporal consistency, it is possible to determine the 6 degrees of freedom (6DoF) pose (i.e., 3D location and 3D orientation) of each device for any given image of the collected image data 109. For example, for the first image for camera device 101a, the camera device 101a is oriented zero degrees with respect to the object 107, and for the first image for camera device 101b (taken at the same time or within short period of time of the obj ect rotation such as one to five seconds), the camera device 101b is oriented 10 degrees with respect to the object 107. This results in an orientation difference of 10 degrees between the two camera devices 101a and 101b in the first image pair. The orientations of the two camera devices 101a and 101b are then determined for the sequences of images captured by each device 101a and 10b. In one embodiment, assuming the devices 101a and 101b are stationary and the object 107 is rotated/moved, temporal consistency is confirmed if, for any pair of images captured at the same time, the orientation difference between the two devices 101a and 101b remains the same (e.g., 10 degrees as computed for the first pair of images).

In embodiments that use other object features 113 (e.g., edges, corners, etc.), the match can be determined based on whether the edges, corners, etc. are detected in a matching sequence (e.g., by matching a threshold number of features) as viewed by each camera device 101.

In one embodiment the per-device processing 111 to extract object features 113 can occur at one of the camera devices 101, jointly performed across multiple camera devices 101, or performed in a third processing device (e.g., cloud server).

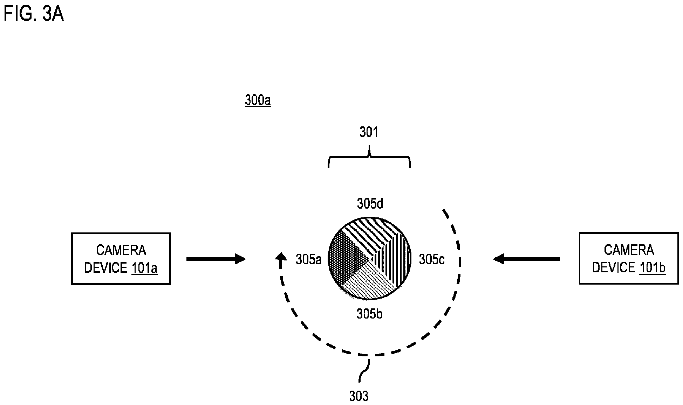

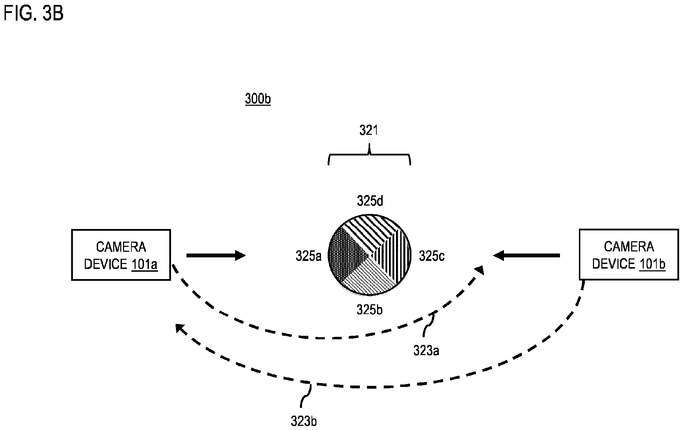

As described above, there are at least three scenarios for capturing and processing image data 109 according to the various embodiments described herein: (1) the object 107 is moved, e.g., rotated, during image capture; (2) the camera devices 101 are moved, e.g. rotated, relative to (e.g., around) the object 107 as the object remains substantially stationary, and (3) the object 107 and the camera devices 101 are both moved relative to each other during the image capture. FIGs. 3A and 3B are diagrams illustrating examples of these respective scenarios for capturing image data for anonymous spatial-temporal authentication, according to various example embodiments.

FIG. 3A illustrates a process 300a for a use case of a handheld object 301 that is moved, e.g., rotated, in the direction 303. For a short window of time (Ti), each camera device 101a and 101b captures and processes a sequence of images of the object 301 to yield a spatial representation (e.g., point cloud of visual features and/or ML analysis-based visual features as an examples of object features 113) of at least a portion (Pi) of the object 107.

As the object is moved, e.g. rotated, a sequence of time-stamped spatial representations is generated (e.g., spatial representations [305a-305b-305c-305d...] in sequence). For example, as the object 301 is rotated clockwise, camera device 101a generates a sequence [305a-305b-305c-305d-305a], and camera device 101b generates a sequence [305c-305d-305a-305b-305c].

The authentication process verifies spatial consistency (e.g., the spatial representations 305a-305d computed by each device 101a and 101b are similar, e.g., by a threshold number of similar features) and temporal consistency. For example, when two camera devices 101a and 101b are placed at 180 deg (e.g., opposite side of the object 301 under interest), if there is a longer duration when representation 305a is computed by camera device 101a, there should be also an equivalent longer duration when representation 305c is computed by camera device 101b. This is because the entire object 301 moves or rotates with the same speed (Vo) while being imaged by the devices 101a and 101b.

Note that each device 101a and 101b should view a sufficient overlapping portion, e.g., a threshold portion, of the object 107 from their respective perspectives to ensure spatial and temporal consistency. For example, it would not be sufficient for camera device 101a to view sequence 305a-305b and for camera device 101b to view sequence 305c-305d because there is no overlap.

In one embodiment, placing the devices (e.g., camera devices 101a and 101b) at certain angles/perspectives relative to the object 107 being viewed can be based on the working environment and environmental conditions. For example, to provide for easier handling of two camera devices 101a and 101b, the object 107 and camera devices 101 can be placed at a smaller relative angle (e.g., 45-90 deg for example compared to 180 deg), thereby reducing user effort for object movement or rotation.

FIG. 3B illustrates a process 300b for a use case of camera devices 101 moving relative to, e.g., rotating around, a static object 321. Under one option, the camera devices 101a and 101b can independently move in relation to (e.g., around and/or along) the object 321 (e.g., by moving a user of the device 101) to capture image data 109 of the object 301. As shown, the two camera devices 101 move around and/or along the object 321 while pointing their cameras at the object 321. For example, camera device 101a moves along a path 323a in relation to object 321 and captures sequence of representations 325a-325b-325c. Camera device 101b moves along a path 323b in relation to object 321 and captures sequence of representations 325c-325b-325a.

In one embodiment, the relative locations of the two devices 101a and 101b are tracked in time as they move along their respective paths 323a and 323b. For example, the relative location is information indicating camera device 101a's location relative to the camera device 101b (or vice versa). To perform temporal authentication, each device 101's relative locations and extracted feature sequences 325a-325b-325c and 325c-325b-325a are verified to match, e.g., by a certain threshold number of sequences, in time. Note that the embodiment above uses the relative locations for temporal authentication because without the relative locations, there would be nothing to check if the individual device sequences are captured at the same time.

Under another option (not illustrated), the two camera devices 101a and 101b may move together at the same pace in the same direction (e.g., along the same path). For example, camera device 101a can lead one step ahead and camera device 101b follows. By using IMU sensors or equivalent on the two camera devices 101a and 101b, a synchronization pattern of relative movements of two devices 101a and 101b can be extracted. Then the relative locations are extracted from two IMUs for temporal authentication. In one embodiment, this pattern can be used to approve temporal consistency of captured image feature sequences on the two camera devices 101a and 101b.

Returning to the process 200 of FIG. 2, at step 207, the authentication platform 117 provides an authentication output 115 indicating that the first camera device 101a and the second camera device 101b are or were at the location of the object within the time threshold based on the match. In one embodiment, a positive verification of the spatial-temporal consistency can be used to verify and/or initiate various actions, services, functions, etc. between the devices (or users of the devices). Examples of these applications include but are not limited to one or more: (1) mutual trust between the devices (or users of the devices); (2) pairing the devices for a wireless communication connection; or (3) trading of the common physical object 107 used for authentication. Other examples of applications, services, functions, etc. that can be based on the authentication output include but are not limited to those provided by any of the services 103 of the services platform 105. By way of example, the authentication output can used to generate an authentication token, certificate, and/or the like to attach to a data record of the action, function, etc. (e.g., a transaction record, sales record, payment record, etc.)

In one embodiment, the authentication output can be used to support the trading and/or purchasing of items. For example, once two camera devices 101 are authenticated via the object 107 that is being inspected (while being, e.g., rotated or moved in a user's hands), a payment from camera device 101a to camera device 101b might be granted upon seller device request. As a confirmation of the purchasing procedure, the price paid might pop up shortly on the first camera device 101a with an audio beep confirming the object purchase and payment success. The price information, for example, can be received from a service provider 103 in the services platform 105. Different forms (e.g., mobile versus fixed) for each pair/group of camera devices 101 used for authentication can be used and combined such as: two or more mobile camera devices, one or more fixed camera devices and one or more mobile camera devices, or two or more fixed camera devices. The types of camera devices 101 to use can depend on the type of situation or use case.

For example, in the case of small open green markets, the seller and buyer could use: (1) two smart phones, (2) smart glasses and smart phone, or (3) fixed camera (looking on the stand for example) and smart phone/ smart glass. In the case of a large superstore, the seller (e.g., camera device 101a) could be fixed on the wall seeing all the goods at stands/shelves, and then the buyer (e.g., device camera 101b) could use a smart phone or smart glasses. The buyer rotates an item e.g. twice and places it in the trolley or cart. Then, audio and/or visual feedback on the smart device may indicate the price or confirm the transaction (no payment at the exit is needed).

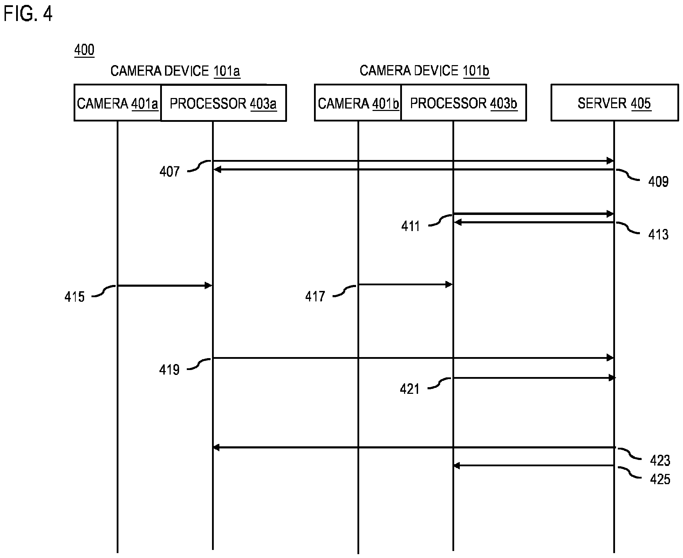

FIG. 4 is a signaling process/diagram 400 illustrating an example of an authentication use case, according to one example embodiment. The components represented in the signaling diagram are: camera device 101a comprising a camera 401a and processor 403a, camera device 101b comprising a camera 401b and processor 403b, and an authentication server 405 (e.g., authentication platform 117). The vertical line from each component represents time and the horizontal arrows represent signals passed between the different components.

In this example, camera devices 101a and 101b would like to request spatial-temporal authentication according to the various embodiments described herein. This example also involves the use of an authentication server 405, but can be similarly performed as a complete peer-to-peer process between the camera devices 101a and 101b.

To begin the authentication process, camera device 101a authenticates itself and/or its user with the authentication server 405 (e.g., using login credentials) and requests to initiate the spatial-temporal authentication protocol. To make the request, processor 403a of the camera device 101a initiates sending a signal with the request with its and/or user's login/access credentials to the authentication server 405 at process 407. In reply, at process 409, the authentication server 405 validates camera device 101a's and/or user's credentials and replies to the processor 403a with a signal indicating successful authentication with the server 405 to initiate spatial-temporal authentication protocols. Similarly, the processor 403b of the second camera device 101b that is to participate in the spatial-temporal authentication session sends a signal with a request with its and/or users' login/access credentials to the authentication server 405 at process 411. At process 413, on successful authentication with the server 405, the authentication server 405 replies to the processor 403b with a signal indicating successful authentication with the server 405.

On successful authentication of the camera devices 101a and 101b to access the authentication function of the server 405, the spatial-temporal authentication protocol is triggered. For example, the users of the camera devices 101a and 101b are instructed to point their devices to view an object of interest. After the two camera devices 101a and 101b are looking on the same object which starts to move/rotate (in hands or by walking around or in relation to), the respective cameras 401a and 401b start capturing a sequence of consistent image streams. At process 415, the camera 401a sends its image stream to the processor 403a, and at process 417, the camera 401b sends its image stream to processor 403b. When the image streams appear at both processors 403a and 403b of the respective camera devices 101a and 101b, the spatial-temporal authentication protocol is triggered.

As part of this protocol, the processors 403a and 403b process their respective image streams/data to identify features of the object of interest (e.g., by a 3D point cloud, a ML model or any other selected object feature). In one embodiment, the object features are hashed (e.g., using any hashing scheme) or otherwise anonymized to prevent exposure of identifiable images of the object, users of the devices 101a and 101b, the location, etc. At process 419, the processor 403a sends the anonymized object features (e.g., 3D point clouds) from the camera device 101a to the authentication server 405. Then, at process 421, the processor 403b sends the anonymized object features (e.g., 3D point clouds) from the camera device 101b to the authentication server 405.

The authentication server 405 performs spatial-temporal authentication according to the various embodiments described herein, for examples, in the one or more processes 100, 200 or 300, and informs the processor 403a of the camera device 101a (at process 423) and processor 403b of the camera device 101b (at process 425) of the authentication results (e.g., authentication output 115).

Returning to FIG. 1, in one example embodiment, the camera devices 101 can include one or more devices or apparatuses, for example, standalone cameras, User Equipment (UE) devices, IoT devices, and/or any other device capable of acquiring sensor information from which object features can be extracted for spatial-temporal authentication according to the various example embodiments described herein. In another example, the authentication platform 117 and/or authentication client 119 can be implemented, respectively, in the standalone camera, User Equipment (UE) device, IoT device, and/or any other device capable of running the spatial-temporal authentication protocols of the various embodiments described herein. Such devices can include but are not limited to a mobile device, a smartphone, smart glasses, a smart visor, a mobile communication device, an infotainment device, a navigation device, a smart watch, a television, a display, a vehicle, a smart lamppost, a smart streetlight, etc. or any combination thereof. By way of example, the devices 101 (e.g., UEs) can be any type of mobile terminal, user terminal, fixed terminal, or portable terminal including a mobile handset, station, unit, device, wearables (e.g., smart glasses, augmented reality (AR) glasses, smart visor or shield), mobile communication device, multimedia computer, multimedia tablet, Internet node, communicator, desktop computer, laptop computer, notebook computer, netbook computer, tablet computer, personal communication system (PCS) device, personal navigation device, personal digital assistants (PDAs), point of sales (POS) device, audio/video player, digital camera/camcorder, positioning device, fitness device, television receiver, radio broadcast receiver, electronic book device, game device, display device, vehicle, smart lamppost, smart streetlight, including the accessories and peripherals of these devices, or any combination thereof. It is also contemplated that a UE can support any type of interface to the user (such as "wearable" circuitry, etc.). In one instance, an IoT device may include one or more remote sensor devices, a wearable, a UE, or a combination thereof. Also, the UEs may be configured to access the communications network by way of any known or still developing communication protocols. In one example embodiment, privacy preserving masking function (e.g., encoding and/or decoding) can be implemented in any of the above-mentioned device or apparatus.

In one example, the camera devices 101 include one or more device sensors (e.g., a front facing camera, a rear facing camera, digital image sensors, LiDAR (light detection and ranging) sensor, global positioning system (GPS) sensors, sound sensors, radars, infrared (IR) light sensors, microphones, height or elevation sensors, accelerometers, tilt sensors, moisture/humidity sensors, pressure sensors, temperature sensor, barometer, NFC sensors, wireless network sensors, etc.) and clients (e.g., mapping applications, navigation applications, image processing applications, augmented reality applications, image/video application, modeling application, communication applications, etc.). In one example, GPS sensors can enable the camera devices 101 to obtain geographic coordinates from one or more satellites for determining current or live location and time. Further, a user location within an area may be determined by a triangulation system such as A-GPS (Assisted-GPS), Cell of Origin, or other location extrapolation technologies when cellular or network signals are available. Further, the camera devices 101 can include one or more flash devices, e.g., a black light infrared flash.

In one example embodiment, the authentication platform 117 and/or authentication client 119 of the system 100 can perform functions related to providing spatial-temporal authentication as discussed with respect to the various embodiments described herein. In one instance, the authentication platform 117 can be implemented in a standalone server computer or a component of another device with connectivity to the communications network 121. For example, the component can be part of an edge computing network where remote computing devices are installed within proximity of a geographic area of interest, one or more assets/objects/individuals to be monitored, or a combination thereof.

In one instance, the authentication platform 117 and/or authentication server 119 can include one or more neural networks or other machine learning algorithms/systems to process image date, such as images/frames of an input (e.g., a video stream or multiple static/still images, or serial or satellite imagery) (e.g., using an image segmentation algorithm) to extract object features 113. In one instance, the neural network of the DNN-based object detection and feature extraction is a convolutional neural network (CNN) which consists of multiple layers of collections of one or more neurons (which are configured to process a portion of an input data).

In one example, the authentication platform 117 and/or authentication client 119 have communication connectivity to one or more services platforms (e.g., services platform 105) and/or one or more software applications that provides one or more services 103 that can use the output (e.g., authentication output 115) of the system 100. By way of example, the communication connectivity can be internal connection within the apparatuses and/or happen over the communications network 121. By way of example, the one or more services 103 may also include mapping services, navigation services, notification services, social networking services, content (e.g., audio, video, images, etc.) provisioning services, application services, storage services, augmented reality (AR) services, location-based services, information-based services (e.g., weather, news, etc.), payment services, market place services, data analytics services, etc. or any combination thereof.

In one example, one or more camera devices 101 may be configured with one or more various sensors for acquiring and/or generating sensor data for real-time use. For example, the sensors can capture one or more images of a geographic area and/or any other sensor data (e.g., LiDAR point clouds, infrared scans, radar scans, etc.) that can be used for real-time object tracking or analytics for spatial-temporal authentication according to the embodiments described herein.

In one example, the components 101 - 119 of the system 100 may communicate over one or more communications networks 121 that includes one or more networks such as a data network, a wireless network, a telephony network, or any combination thereof. It is contemplated that the communication network 121 may be any local area network (LAN), metropolitan area network (MAN), wide area network (WAN), a public data network (e.g., the Internet), short range wireless communication network, or any other suitable packet-switched network, such as a commercially owned, proprietary packet-switched network, e.g., a proprietary cable or fiber-optic network, and the like, or any combination thereof. In addition, the communication network 121 may be, for example, a cellular telecom network and may employ various technologies including enhanced data rates for global evolution (EDGE), general packet radio service (GPRS), global system for mobile communications (GSM), Internet protocol multimedia subsystem (IMS), universal mobile telecommunications system (UMTS), worldwide interoperability for microwave access (WiMAX), Long Term Evolution (LTE) networks, 5G/3GPP (fifth-generation technology standard for broadband cellular networks / 3^{rd} Generation Partnership Project) or any further generation, code division multiple access (CDMA), wideband code division multiple access (WCDMA), wireless fidelity (Wi-Fi), wireless LAN (WLAN), Bluetooth^{®}, UWB (Ultra-wideband), Internet Protocol (IP) data casting, satellite, mobile ad-hoc network (MANET), and the like, or any combination thereof.

In one example, the system 100 or any of its components may be a platform with multiple interconnected components (e.g., a distributed framework). The system 100 and/or any of its components may include multiple servers, intelligent networking devices, computing devices, components, and corresponding software for spatial-temporal authentication. In addition, it is noted that the system 100 or any of its components may be a separate entity, a part of the one or more services, a part of a services platform, or included within other devices, or divided between any other components.

By way of example, the components of the system 100 can communicate with each other and other components external to the system 100 using well known, new or still developing protocols. In this context, a protocol includes a set of rules defining how the network nodes, e.g. the components of the system 100, within the communications network interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defined by the OSI Reference Model.

The processes described herein for providing spatial temporal authentication may be advantageously implemented via software, hardware (e.g., general processor, Digital Signal Processing (DSP) chip, an Application Specific Integrated Circuit (ASIC), Field Programmable Gate Arrays (FPGAs), etc.), firmware, circuitry, or a combination thereof. Such exemplary hardware for performing the described functions is detailed below.

FIG. 5 illustrates an example computer system 500 upon which embodiments of the invention as described with the processes 100, 200, 300, 400 and 500 may be implemented. The computer system 500 is programmed (e.g., via computer program code or instructions) to provide spatial temporal authentication as described herein and includes a communication mechanism such as a bus 510 for passing information between other internal and external components of the computer system 500. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range.

A bus 510 includes one or more parallel conductors of information so that information is transferred quickly among devices coupled to the bus 510. One or more processors 502 for processing information are coupled with the bus 510.

A processor 502 performs a set of operations on information as specified by computer program code related to providing spatial temporal authentication. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations includes bringing information in from the bus 510 and placing information on the bus 510. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 502, such as a sequence of operation codes, constitute processor instructions, also called computer system instructions or, simply, computer instructions. Processors may be implemented as mechanical, electrical, magnetic, optical, chemical or quantum components, among others, alone or in combination.

The computer system 500 also includes a memory 504 coupled to bus 510. The memory 504, such as a random access memory (RAM) or other dynamic storage device, stores information including processor instructions for providing spatial temporal authentication. Dynamic memory allows information stored therein to be changed by the computer system 500. RAM allows a unit of information stored at a location called a memory address to be stored and retrieved independently of information at neighboring addresses. The memory 504 is also used by the processor 502 to store temporary values during execution of processor instructions. The computer system 500 also includes a read only memory (ROM) 506 or other static storage device coupled to the bus 510 for storing static information, including instructions, that is not changed by the computer system 500. Some memory is composed of volatile storage that loses the information stored thereon when power is lost. Also coupled to bus 510 is a non-volatile (persistent) storage device 508, such as a magnetic disk, optical disk or flash card, for storing information, including instructions, that persists even when the computer system 500 is turned off or otherwise loses power.

Information, including instructions for providing spatial temporal authentication, is provided to the bus 510 for use by the processor from an external input device 512, such as a keyboard containing alphanumeric keys operated by a human user, or one or more sensors. A sensor detects conditions in its vicinity and transforms those detections into physical expression compatible with the measurable phenomenon used to represent information in the computer system 500. Other external devices coupled to bus 510, used primarily for interacting with humans, include a display device 514, such as a cathode ray tube (CRT) or a liquid crystal display (LCD), or plasma screen or printer for presenting text or images, and a pointing device 516, such as a mouse or a trackball or cursor direction keys, or motion sensor, for controlling a position of a small cursor image presented on the display 514 and issuing commands associated with graphical elements presented on the display 514. In some embodiments, for example, in embodiments in which the computer system 500 performs all functions automatically without human input, one or more of external input device 512, display device 514 and pointing device 516 is omitted. In various embodiment, the computer system 500 is further connected via the bus 510 to a one or more camera device, flash device or Lidar device.

In the illustrated example embodiment, special purpose hardware, such as an application specific integrated circuit (ASIC) 520, is coupled to bus 510. The special purpose hardware is configured to perform operations not performed by processor 502 quickly enough for special purposes. Examples of application specific ICs include graphics accelerator cards for generating images for display 514, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 500 also includes one or more instances of a communications interface 570 coupled to bus 510. Communication interface 570 provides a one-way or two-way communication coupling to a variety of external devices that operate with their own processors, such as printers, scanners and external disks. In general, the coupling is with a network link 578 that is connected to a local network 580 to which a variety of external devices with their own processors are connected. For example, communication interface 570 may be a parallel port or a serial port or a universal serial bus (USB) port on a personal computer. In some embodiments, communications interface 570 is an integrated services digital network (ISDN) card or a digital subscriber line (DSL) card or a telephone modem that provides an information communication connection to a corresponding type of telephone line. In some embodiments, a communication interface 570 is a cable modem that converts signals on bus 510 into signals for a communication connection over a coaxial cable or into optical signals for a communication connection over a fiber optic cable. As another example, communications interface 570 may be a local area network (LAN) card to provide a data communication connection to a compatible LAN, such as Ethernet. Wireless links may also be implemented. For wireless links, the communications interface 570 sends or receives or both sends and receives electrical, acoustic or electromagnetic signals, including infrared and optical signals, that carry information streams, such as digital data. For example, in wireless handheld devices, such as mobile telephones like cell phones, the communications interface 570 includes a radio band electromagnetic transmitter and receiver called a radio transceiver. In certain embodiments, the communications interface 570 enables connection to the communications network 121 for providing spatial temporal authentication.

The term computer-readable medium is used herein to refer to any medium that participates in providing information to processor 502, including instructions for execution. Such a medium may take many forms, including, but not limited to, non-volatile media, volatile media and transmission media. Non-volatile media include, for example, optical or magnetic disks, such as storage device 508. Volatile media include, for example, dynamic memory 504. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, any other memory chip or cartridge, a carrier wave, or any other medium from which a computer can read.

Network link 578 typically provides information communication using transmission media through one or more networks to other devices that use or process the information. For example, network link 578 may provide a connection through local network 580 to a host computer 582 or to equipment 584 operated by an Internet Service Provider (ISP). ISP equipment 584 in turn provides data communication services through the public, world-wide packet-switching communication network of networks now commonly referred to as the Internet 590.

A computer called a server host 592 connected to the Internet hosts a process that provides a service in response to information received over the Internet. For example, server host 592 hosts a process that provides information representing video data for presentation at display 514. It is contemplated that the components of the system 100 can be deployed in various configurations within other computer systems, e.g., host 582 and server 592.

FIG. 6 illustrates a chip set 600 upon which embodiments of the invention, for example, the components (e.g., a camera device 100, a per-device processing 111, an authentication platform 117, a client 119, a service 103, a flash device 310, an object 107 and a services platform 105) may be implemented. The chip set 600 is programmed to provide spatial temporal authentication as described herein and includes, for instance, the processor and memory components described with respect to FIG. 5 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set can be implemented in a single chip.

In one embodiment, the chip set 600 includes a communication mechanism such as a bus 601 for passing information among the components of the chip set 600. A processor 603 has connectivity to the bus 601 to execute instructions and process information stored in, for example, a memory 605. The processor 603 may include one or more processing cores with each core configured to perform independently. A multi-core processor enables multiprocessing within a single physical package. Examples of a multi-core processor include two, four, eight, or greater numbers of processing cores. Alternatively or in addition, the processor 603 may include one or more microprocessors configured in tandem via the bus 601 to enable independent execution of instructions, pipelining, and multithreading. The processor 603 may also be accompanied with one or more specialized components to perform certain processing functions and tasks such as one or more digital signal processors (DSP) 607, or one or more application-specific integrated circuits (ASIC) 609. A DSP 607 typically is configured to process real-world signals (e.g., sound) in real time independently of the processor 603. Similarly, an ASIC 609 can be configured to perform specialized functions not easily performed by a general purposed processor. Other specialized components to aid in performing the inventive functions described herein include one or more field programmable gate arrays (FPGA) (not shown), one or more controllers (not shown), or one or more other special-purpose computer chips.

The processor 603 and accompanying components have connectivity to the memory 605 via the bus 601. The memory 605 includes both dynamic memory (e.g., RAM, magnetic disk, writable optical disk, etc.) and static memory (e.g., ROM, CD-ROM, etc.) for storing executable instructions that when executed perform the inventive steps described herein to provide spatial temporal authentication. The memory 605 also stores the data associated with or generated by the execution of the inventive steps.

## Claims

1. An apparatus comprising:
means for receiving first image data captured by a first camera device, wherein the first image data depicts an object positioned at a location;
means for receiving second image data captured by a second camera device, wherein the second image data depicts the object at the location and wherein the second image data is captured within a time threshold of the first image data;
means for processing the first image data to extract one or more first object features;
means for processing the second image data to extract one or more second obj ect features;
means for determining a match between the one or more first object features and the one or more second object features; and
means for providing an authentication output indicating that the first camera device and the second camera device are or were at the location of the object within the time threshold based on the match.

2. The apparatus of claim 1, wherein the one or more first object features include a first sequence of features and the one or more second object features include a second sequence of features extracted during a movement of the object and/or a movement of the first camera device and the second camera device in relation to the object while the first image data and the second image data are captured.

3. The apparatus of claim 2, wherein the match between the one or more first object features and the one or more second object features is further based on matching at least partly the first sequence of features and the second sequence of features.

4. The apparatus according to any of claims 1-3, wherein the apparatus further comprises:
means for computing a first hash of the one or more first object features, and a second hash of the one or more second object features, and
wherein the match between the one or more first images features and the one or more second object features is based on the first hash and the second hash are at least partly similar.

5. The apparatus according to any of claims 1-4, wherein capturing of the first image data and the second image data is synchronized over a wireless connection between the first camera device and the second camera device.

6. The apparatus according to any of claims 1-5, wherein the apparatus further comprises:
means for processing the first image data to create a first three-dimensional point cloud representation of the object;
means for processing the second image data to extract a second three-dimensional point cloud representation of the object,
wherein the one or more first object features comprise at least in part of the first three-dimensional point cloud representation and the one or more second object features comprise at least in part of the second three-dimensional point cloud representation; and
wherein the match between the one or more first object features and the one or more second object features is further based on at least partly matching the first three-dimensional point cloud representation and the second three-dimensional point cloud representation.

7. The apparatus according to any of claims 1-6, wherein the apparatus is a local component of the first camera device, the second camera device, or a combination thereof.

8. The apparatus according to any of claims 1-7, wherein the authentication output is used to authenticate a transaction associated with the object, between the first camera device and the second camera device, between a first user/owner of the first camera device and a second user/owner the second camera device, or a combination thereof.

9. The apparatus of claim 8, wherein the authentication output is attached to a data record indicating the transaction.

10. The apparatus according to any of claims 1-9, wherein the authentication output is used to create a wireless communication connection between the first camera device and the second camera device, between a first user/owner of the first camera device and a second user/owner the second camera device, or a combination thereof.

11. A method comprising:
receiving first image data captured by a first camera device, wherein the first image data depicts an object positioned at a location;
receiving second image data captured by a second camera device, wherein the second image data depicts the object at the location and wherein the second image data is captured within a time threshold of the first image data;
processing the first image data to extract one or more first object features;
processing the second image data to extract one or more second object features;
determining a match between the one or more first object features and the one or more second object features; and
providing an authentication output indicating that the first camera device and the second camera device are or were at the location of the object within the time threshold based on the match.

12. The method of claim 11, wherein the one or more first object features include a first sequence of features and the one or more second object features include a second sequence of features extracted during a movement of the object and/or of the first camera device and the second camera device in relation to the object while the first image data and the second image data are captured.

13. The apparatus of claim 12, wherein the match between the one or more first object features and the one or more second object features is further based on matching at least partly the first sequence of features and the second sequence of features.

14. A computer program comprising instructions, which, when executed by an apparatus, cause the apparatus to:
receiving first image data captured by a first camera device, wherein the first image data depicts an object positioned at a location;
receiving second image data captured by a second camera device, wherein the second image data depicts the object at the location and wherein the second image data is captured within a time threshold of the first image;
processing the first image data to extract one or more first object features;
processing the second image data to extract one or more second object features;
determining a match between the one or more first object features and the one or more second object features; and
providing an authentication output indicating that the first camera device and the second camera device are or were at the location of the object within the time threshold based on the match.

15. The computer program of claim 14, wherein the one or more first object features include a first sequence of features and the one or more second object features include a second sequence of features extracted during a movement of the object and/or a movement of the first camera device and the second camera device in relation to the object while the first image data and the second image data are captured
